# EUROPÄISCHE PATENTANMELDUNG

(11) **EP 2 269 891 A2**
(43) Veröffentlichungstag der Anmeldung: **05.01.2011**
(21) Anmeldenummer: 10012103.7
(22) Anmeldetag: 05.12.2006
(51) Int. Cl.: B62B 3/14

(54) **Einkaufswagen mit Anzeige oder Werbefläche**

(30) Priorität: 08.12.2005 DE 202005019315 U
(62) Teilanmeldung aus: 06840864.0
(71) Anmelder: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)

(57) **Zusammenfassung**

Der Einkaufsassistent wird temporär mit einem fest am Einkaufswagen angeordneten Gehäuse für die permanent vorhandene Werbefläche verbunden, wobei die Befestigung für den Einkaufsassistenten außerhalb der Werbefläche angeordnet ist und die permanent vorhandene Werbefläche optional auch als Display für den Einkaufsassistenten verwendet werden kann.

## Beschreibung

### Technisches Gebiet

Die Erfindung betrifft das Gebiet der Werbeanzeigen an einem Einkaufswagen.

### Stand der Technik

Aus der Produktbeschreibung "Portable Store Assistant " der Firma Wincor Nixdorf mit Druckdatum Oktober 2004 ist ein Einkaufsassistent bekannt.

Der Einkaufsassistent ist ein eigenständiger PC, der unter dem Windows CE Betriebssystem betrieben wird und stellt einen nicht unerheblichen Wert dar.

Dieser Einkaufsassistent ist am Schiebegriff eines Einkaufswagens anbringbar und zeigt dem Kunden auf seinem Display diverse Informationen an.

Der Einkaufsassistent umfasst auch einen Barcodeleser. Sobald ein Barcode eines Produktes in die Nähe des Scanners gebracht wird, zeigt das Display des Einkaufsassistenten Preisinformationen des gescannten Produktes an.

Aufgrund dieses Wertes wird der Einkaufsassistent nur an registrierte Kunden des Einkaufsmarktes für die Dauer des Einkaufes ausgegeben und wird nur temporär am Einkaufswagen befestigt.

Die Produktbeschreibung zeigt den Einkaufsassistenten über eine Schwanenhals Verbindung mit dem Schiebegriff des Einkaufswagens verbunden.

Der Fuß des Schwanenhalses sitzt mittig in einem normalerweise als Werbefläche vorgesehenen Bereich des Schiebegriffs.

Nachteilig bei der bekannten Lösung ist der Umstand, dass der Einkaufsassistent eine spezielle Halterung hat, die direkt mittig in dem Bereich des Schiebegriffes angebracht ist, der sonst als Werbefläche zur Verfügung steht. Hierdurch ist in nachteiliger Weise dieser Bereich des Schiebegriffes nicht mehr als Werbefläche einsetzbar.

Dies ist insbesondere deswegen von Nachteil, weil die Einkaufsassistenten -wie bereits erwähnt- nur an registrierte Kunden ausgegeben werden und daher bei der Mehrzahl der Kunden die Einkaufswagen ohne Einkaufsassistenten benutzen keine Werbefläche mehr vorhanden ist.

Auch ist der Einkaufsassistent deshalb relativ groß, da er ein eigenes Display hat, auf welchem die Informationen für den Kunden angezeigt werden. Diese Größe des Einkaufsassistenten erzeugt wiederum einen entsprechend großen Platzbedarf für das Bereithalten und Einsammeln der temporär an die Kunden ausgegebenen Einkaufsassistenten.

Aus der DE 19843531 A1 ist eine Werbeanzeige für einen Einkaufswagen bekannt, bei welcher elektronische, gegebenenfalls programmierbare Informationsträger zum Einsatz kommen. Über die dort beschriebene Werbeanzeige ist nicht offenbart, diese als Anzeige für einen Einkaufsassistenten zu verwenden. Der Einkaufsassistent muss daher relativ groß sein, um ein ausreichend großes Display zu haben.

Aus der DE 4232287 A1 ist ein Werbeträger zur Aufnahme eines Informationsträgers bekannt, wobei der Informationsträger holographischer und/oder elektronischer Art sein kann. Dieser Informationsträger kann die Aufgabe einer Anzeige erfüllen, jedoch ist nicht offenbart, diesen Informationsträger als Anzeige für einen Einkaufsassistenten zu verwenden. Der Einkaufsassistent muss daher relativ groß sein, um ein ausreichend großes Display zu haben.

Aus der EP 0601064 B1 ist ein Einkaufsassistent bekannt, der temporär am Einkaufswagen angebracht wird und über ein eigenes Display verfügt. Eine am Wagen permanent angebrachte Werbefläche als Display für den Einkaufsassistenten zu verwenden ist nicht offenbart. Hierdurch muss der Einkaufsassistent relativ groß gestaltet werden, um ein ausreichend großes Display zu haben.

Aus der WO 97/43163 ist eine permanent am Einkaufswagen vorhandene Halterung für einen Scanner oder Einkaufsassistenten bekannt, die jedoch über keinerlei Anzeige verfügt. Auch hier muss der Einkaufsassistent relativ groß gestaltet werden, um ein ausreichend großes Display zu haben.

Aus der US 6177880 B1 ist ein Einkaufsassistent bekannt, der in den Schiebegriff des Einkaufswagens fest integriert ist. Das Display des Einkaufsassistenten kann hierbei als Werbefläche dienen, doch ist ein erhöhter Aufwand nötig, denn um an jedem Einkaufswagen eine Werbefläche zu realisierten, muss bei diesem Stand der Technik jeder Einkaufswagen mit einem hochwertigen Einkaufsassistenten ausgerüstet werden.

### Offenbarung der Erfindung

### Technische Aufgabe

Es ist Aufgabe der Erfindung einen Einkaufswagen mit permanent vorhandener Anzeigefläche zu schaffen, bei welchem einfach und bedienungsfreundlich temporär ein Einkaufsassistent angebracht werden kann, ohne dass es zu Beeinträchtigungen der permanent vorhandenen Anzeigefläche kommt.

### Technische Lösung

Diese Aufgabe wird gelöst, indem der Einkaufsassistent mit einem fest am Einkaufswagen angeordneten Gehäuse für die permanent vorhandene Werbefläche verbunden wird, die Befestigung für den Einkaufsassistenten außerhalb der Werbefläche angeordnet ist und die permanent vorhandene Werbefläche optional auch als Display für den Einkaufsassistenten verwendet werden kann.

### Vorteilhafte Wirkungen

Hierdurch wird vorteilhaft bewirkt, dass in der Grundausstattung der Einkaufswagen eine permanente Werbefläche aufweist, die immer sichtbar ist und bei der Verwendung des Einkaufsassistenten an Einkaufswagen das Display des Einkaufsassistenten gut sichtbar ist..

Die permanente Werbefläche substituiert somit temporär das Display des Einkaufsassistenten.

Der Einkaufsassistent benötigt immer dann die Werbefläche als Display, wenn der Benutzer Eingaben am Einkaufsassistenten vornimmt oder Informationen vom Einkaufsassistenten abruf.

Außerhalb dieser Zeit, wenn der Einkaufsassistent in einer Art "stand by" Modus ist, kann die Werbefläche wieder die ursprüngliche Werbeinformation anzeigen.

In einer Weiterbildung der Erfindung ist es vorgesehen, dass die permanent am Einkaufswagen angebrachte Werbefläche ebenfalls ein elektronisches Display umfasst. Die Werbefläche wird zur elektronischen Werbefläche.

Der Vorteil einer solchen elektronischen Werbefläche ist die Möglichkeit, die auf dem Display dargestellte Information schnell zu wechseln, ohne die bekannte aus Papier bestehende Werbefläche mit entsprechendem Montageaufwand wechseln zu müssen.

Hierbei ist es möglich, dass beim Anbringen des Einkaufsassistenten die Information der permanent am Einkaufswagen angebrachten elektronischen Werbefläche änderbar ist und beispielsweise eine Werbung für ein anderes Produkt anzeigbar ist.

Diese Werbung für ein anderes Produkt bleibt auch nach dem Entfernen des Einkaufsassistenten permanent sichtbar.

Hierdurch ist es vorteilhaft möglich dass, die Verwendung des Einkaufsassistenten durch den Kunden das Wechseln der permanenten Werbeinformation am Einkaufswagen erfolgt, ohne dass ein zusätzlicher Aufwand für den Einkaufsmarkt entsteht.

Die temporäre Verbindung des Einkaufsassistenten mit der permanent am Einkaufswagen befestigten elektronischen Werbefläche kann auch dazu benutzt werden, um einen Energiespeicher in der elektronischen Werbefläche wieder aufzuladen.

Bei einer anderen Weiterbildung der Erfindung kommt ein Einkaufsassistent zum Einsatz, der kein eigenes Display besitzt und zum Anzeigen der Information das permanent am Einkaufswagen vorhandene elektronische Display benutzt.

Sobald der Einkaufsassistent mit dem permanent am Einkaufswagen vorhandenen elektronischen Display verbunden ist, dient die elektronische Werbefläche als Anzeige für den Einkaufsassistenten.

Hierdurch ist vorteilhaft möglich, die Größe des Einkaufsassistenten zu verringern.

Bei einer Weiterbildung ist es vorgesehen, dass in der elektronischen Werbefläche zusätzlich noch ein Scanner integriert ist.

Hierdurch ist vorteilhaft möglich, die Größe des Einkaufsassistenten nochmals zu verringern.

### Kurze Beschreibung der Zeichnungen

Nachfolgend ist die Erfindung anhand möglicher Ausführungsbeispiele näher erläutert.

Die Figur 1 zeigt schematisiert einen Einkaufswagen mit einer am Schiebegriff angebrachten permanenten Werbefläche Einheit, auf welcher der Einkaufsassistent temporär befestigbar ist.

Die Figur 2 zeigt eine Weiterbildung der Erfindung bei welcher der Einkaufsassistent an einer Werbefläche Einheit mit elektronischer Anzeige temporär anbringbar ist, wobei die Werbeflächeeinheit ihrerseits am Einkaufswagen permanent angebracht ist.

Der Einkaufswagen 1 bat einen Schiebegriff, an welchem sich eine Werbeflächeeinheit 2 befindet. Diese Werbeflächeneinheit 2 kann als zusätlich auf einen Schiebegriff montiertes Teil oder als integriertes Teil eines Schiebegriffs ausgebildet seitt.

Auf die Werbeflächeneinheit 2 ist ein Einkaufsassistent 3 aufgesetzt. Die Befestigung des Einkaufsassistenten 3 auf der Werbeflächeneinheit erfolgt durch Befestigungselemente 4.

Als Befestigungselemente 4 eignen sich prinzipiell alle Arten der Befestigung, die einen sicheren Halt des Einkaufsassistenten 3 auf der Werbeflächeneinheit 2 ermöglichen und dabei schnell und ohne Werkzeug lösbar sind.

Als mögliche Arten sind hier genannt: Steckverbindungen zum senkrechten Aufsetzen des Einkaufsassistenten 3 auf die Werbeflächeneinheit 2 oder Schienen bzw. Nuten zum Aufschieben des Einkaufsassistenten 3 auf die Werbeflächeneinheit 2.

Grundsätzlich ist auch eine beliebige andere Art der Anbringung möglich, solange die generelle Anforderung erfüllt ist und die permanent an der Werbeflächeneinheit 2 vorhandene Werbefläche nicht durch die Befestigung 4 verdeckt oder sonst wie beeinträchtigt wird.

Die Werbeflächeneinheit 2 kann auch ein elektronisches Display enthalten. Die Werbefläche wird zur elektronischen Werbefläche und die Befestigungselemente 4 können neben den mechanischen Aufgaben noch zusätzliche elektrische/elektronische Funktionen erfüllen:

Die Befestigungselemente 4 können dann auch zur Übermittlung von Energie oder Daten verwendet werden.

Beim mechanischen Anbringen des Einkaufsassistenten 3 auf der Werbeflächeneinheit 2 ist es möglich, automatisch eine elektrische Verbindung herzustellen, über welche Energie zum Aufladen eines in der Werbeflächeneinheit 2 angebrachten Energiespeichers übertragen wird.

Es ist auch möglich, dass über die elektrische Verbindung Daten übertragen werden und diese Daten einen Einfluss auf die auf dem elektronischen Display angezeigten Informationen haben.

Hierdurch ist es vorteilhaft möglich, dass die Verwendung des Einkaufsassistenten 3 durch den Kunden zu einer steten Aktualisierung der permanente am Einkaufswagen 1 montierten Werbefläche führt und somit das Servicepersonal des Einkaufsmarktes von dieser Tätigkeit entlastet wird.

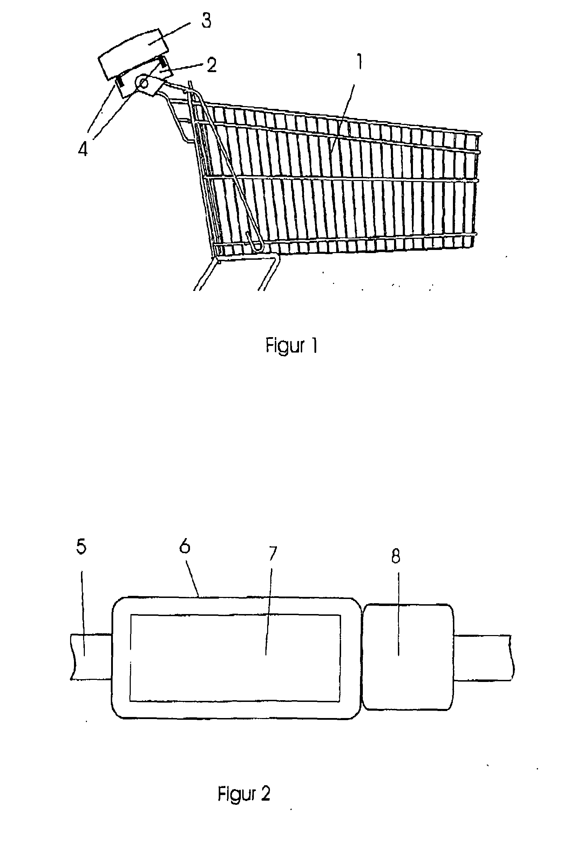

Die Figur 2 zeigt einen Schiebegriffabschnitt 5, auf dem eine Werbeflächeneinheit 6 mit einem elektronischen Display 7. Seitlich an der Werbeflächeneinheit 6 ist der Einkaufsassistent 8 lösbar angebracht.

Wie bereits beschrieben entsteht beim Anbringen des Einkaufsassistenten 8 an der Werbeflächeneinheit 6 eine elektrische Verbindung.

Durch diese Verbindung ist es möglich, dass das elektronische Display 7 als Anzeige für die Informationen dient, die im Zusammenhang mit der Verwendung des Einkaufsassistenten 8 dem Benutzer angezeigt werden.

Beispielsweise umfasst der Einkaufsassistent 8 einen Scanner, mit welchem der Kunde die gekaufte Ware selbst erfasst und den Preis sowie weitere Informationen dazu auf dem elektronischen Display 7 angezeigt bekommt.

Hierdurch ist vorteilhaft erreicht, dass der Einkaufsassistent 8 klein und handlich sowie preiswerter gestaltet werden kann, da er gegenüber dem aus dem Stand der Technik bekannten Einkaufsassistenten 3 ohne eigenes Display betrieben werden kann.

Auch ist es möglich, in die Werbeflächeneinheit 6 einen Scanner zu integrieren und/oder das Display an der Werbeflächeneinheit 6 als touchscreen zu verwenden.

Hierdurch sinkt der Aufwand für den Einkaufsassistenten 8 und der Einkaufsassistent 8 ist schließlich noch handlicher, was Vorteile beim Aufbewahren des Einkaufsassistenten, beim Ausgeben des Einkaufsassistenten 8 an den Kunden und bei der Rücknahme des Einkaufsassistenten 8 vom Kunden mit sich bringt. Durch die geringen Ausmaße ist es auch leichter möglich, die Einkaufsassistenten durch eine automatische Transportvorrichtung von der Kasse an die Ausgabestelle zu transportieren.

Nach dem Entfernen des Einkaufsassistenten 8 dient das elektronische Display 7 als permanente Werbefläche.

Der Inhalt dieser Werbefläche 7 kann durch das Anbringen des Einkaufsassistenten 8 verändert worden sein.

Auch ist es möglich, dass das elektronische Display 7 neben einem statischen Bild auch bewegte Bilder und/ oder Graphiken darstellt.

Zusätzlich kann die Werbeflächeneinheit 6 noch einen Lautsprecher umfassen, dann lassen sich auch Videos zu Werbezwecken einsetzen.

Um eine akustische Störung anderer Kunden zu vermeiden ist es möglich, die Audioinformation über einen vom Kunden getragenen Kopfhörer auszugeben.

Der Kopfhörer kann sowohl drahtgebundene, als auch drahtlos mit der Werbeflächeneinheit 6 verbunden sein.

Die Informationsübertragung zwischen dem Einkaufsassistenten 8 und der Werbeflächeneinheit 6 kann auch berührungslos erfolgen, etwa über eine Infrarot-oder Funkschnittstelle.

Die Energieversorgung der Werbeflächeneintheit 6 kann auch über Solarzellen erfolgen.

Neben der Datenübertragung und / oder Energieübertragung vom Einkaufsassistenten 8 zur Werbeflächeneinheit 6 ist es auch möglich einen bidirektionalen Datenaustausch zwischen dem Einkaufsassistenten 8 und der Werbeflächeneinheit 6 vorzunehmen.

Durch den Einsatz von kostengünstigen elektronischen Displays 7 ist es wirtschaftlich sinnvoll, dass an jedem Einkaufswagen 1 ein solches elektronisches Display 7 permanent vorhanden ist.

### Gewerbliche Anwendbarkeit

Die Erfindung kann gewerblich überall dort eingesetzt werden, wo Einkaufswagen mit Werbeflächen dem Kunden bereitgestellt werden.

## Patentansprüche

1. Einkaufswagen mit Anzeige oder Werbeflächefläche wobei am Griff des Einkaufswagens eine Werbeflächeneinheit mit einer Anzeigefläche permanent vorhandenen ist,
**dadurch gekennzeichnet, dass**
an der Werbeflächeneinheit (2, 6) eine Befestigungsmöglichkeit geeignet zur Aufnahme eines elektronischen Einkaufsassistenten (3) vorhanden ist

2. Einkaufswagen nach Anspruch 1
**dadurch gekennzeichnet, dass**
Befestigungsmöglichkeit zum senkrechten Aufsetzen des Einkaufsassistenten geeignet ist.

3. Einkaufswagen nach Anspruch 1
**dadurch gekennzeichnet, dass**
die Befestigungsmöglichkeit eine Steckverbindung ist

4. Einkaufswagen nach Anspruch 1
**dadurch gekennzeichnet, dass**
die Befestigungsmöglichkeit Schienen umfasst.

5. Einkaufswagen nach Anspruch 1
**dadurch gekennzeichnet, dass**
die Befestigungsmöglichkeit Nuten umfaßt
